Europäisches Patentamt

European Patent Office

Office européen des brevets

(19)

(11) Publication number: **0 077 085**
**A2**

## EUROPEAN PATENT APPLICATION

(21) Application number: **82201053.4**

(22) Date of filing: **20.08.82**

(51) Int. Cl.³: **B 66 C 13/46**

(30) Priority: **25.08.81 NL 8103937**

(43) Date of publication of application: **20.04.83**
**Bulletin 83/16**

(84) Designated Contracting States: **AT BE CH DE FR GB IT LI LU SE**

(71) Applicant: **HOOGOVENS GROEP B.V., P.O. Box 10.000, NL-1970 CA IJmuiden (NL)**

(72) Inventor: **Voors, Antonie Wouter, N.Stationsweg 20, Bloemendaal (NL)**
Inventor: **Pronk, Cornelis, Baartven 4, Castricum (NL)**
Inventor: **Boon, Louis Anton, Meerkoetstraat 48, Uitgeest (NL)**

(74) Representative: **van Buytene, Arie Jacobus et al, p/a Hoogovens Groep B.V. P.O.Box 10.000, NL-1970 CA IJmuiden (NL)**

(54) **Warehousing system.**

(57) A warehousing system for storage of products uses a travelling crane and data-processing means for data relating to product location. To achieve accuracy of positioning of the crane, the crane carries a further onboard computer to which are fed signals from sensors for the movement of the crane and its trolley past reference points and for the rotation of the crane and trolley wheels. The on-board computer thus corrects for skew-running of the crane, wear of the wheels and slipping or skidding of the wheels.

0077085

1.


"Warehousing System"


The invention relates to a warehousing system for storing and recovering products in a warehouse using a travelling crane, position sensing means for the crane and data processing means.

Recently a number of hot strip rolling mills have been built which can be regarded as being in a wide sense modern both in their automation and in their operation. The storage of slabs and coils respectively before and after rolling has however scarcely undergone any automation. The intermediate and final storage of these products is gaining importance as a subject for rationalisation in the iron and steel industry.

The geometry of the warehouse is as much determined by apparatus such as cranes, other transport means and the possibilities for location of the products as by the space available for the products. The use of a travelling crane makes it necessary to have an elongate hall, while the use of transport devices which can move freely over the floor of the hall allows a greater degree of choice in the shape of the hall.

In the article "Lagerung von Warmbreitbandbunden" (Storage of hot wide strip coils), Stahl u. Eisen 97 (1977) No. 17 Aug. 25, p 821-826, Lindner, Klos and Setzer discuss how hot-rolled coils can be stored using a crane, and what problems are involved.

One object of the invention is to solve these problems at least partly, in particular to establish a control system for the crane which corrects for errors in the crane movement.

The present invention is set out in the claims.

The invention can provide a system in which features of the crane operation which are undesirable in a warehouse system of this general kind are eliminated using calculated correction factors, in particular a correction is made for skew-running of the crane and for wear on the wheels of the bridge and of the trolley on the bridge, while slipping and skidding may be continuously corrected for.

By the invention it is possible to provide a system for the storage and recovery of products in a warehouse, where in place of the usual labels and clipboards to identify the products, use is made of the position of each package both at the time of placement and on picking it up again.

More specifically, the reference points can be fixed along one of the long sides of the warehouse at every 12 metres and the location of the crane intermediate these points can be read off continuously using the pulse emitter. Correction can be applied when the crane passes each fixed reference point.

The invention can be applied both to driver-controlled and automatically controlled cranes. The driving axle(s) of the driven wheels on both sides of the crane may be coupled or uncoupled.

The preferred embodiment of the invention will now be described by way of example with reference to the accompanying drawings, in which:-

Fig. 1 is a general view of a warehouse with steel coils on the floor and a travelling crane.

Fig. 2 is a plan of the warehouse showing two travelling cranes.

Fig. 3 is a block diagram for correction for the diameter of the trolley wheels.

Fig. 4 is a block diagram for adjustment for the wheel diameter at the relative reference side and adjustment for the maximum skew-running.

Fig. 5 is a block diagram for correction for the wheel diameter on the absolute reference side of the crane.

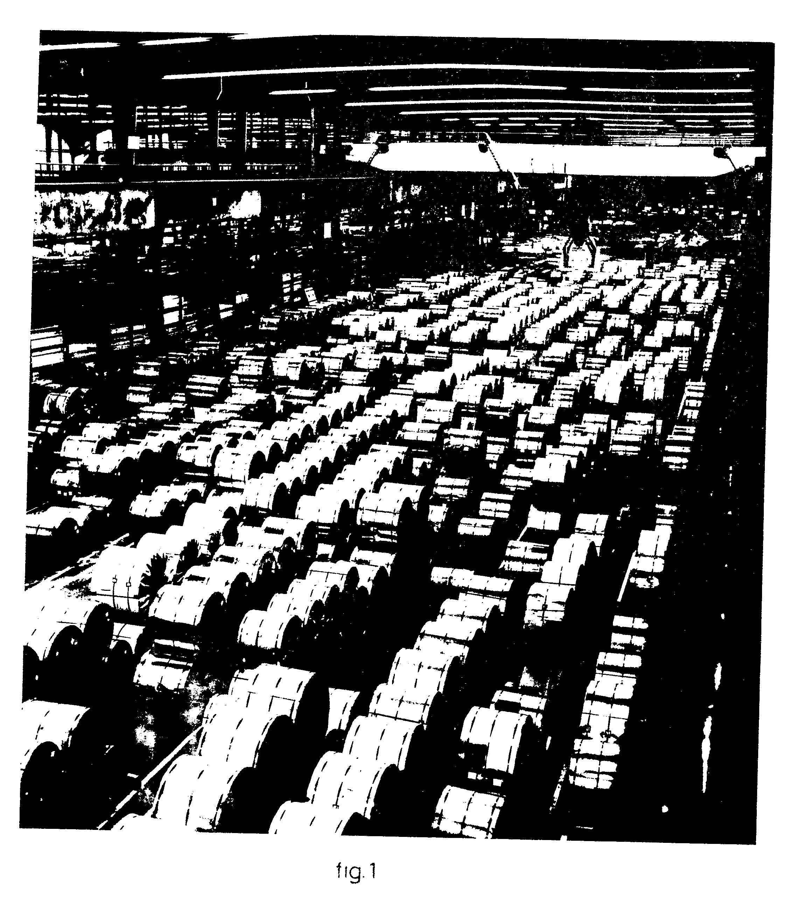

Fig. 1 serves to give an impression of the storage of steel coils on the floor of a warehouse bounded by pillars, where transport, placing and pick-up of the coils is carried out by at least one travelling crane having a transversely moving trolley. In such a warehouse, the present invention can advantageously be applied.

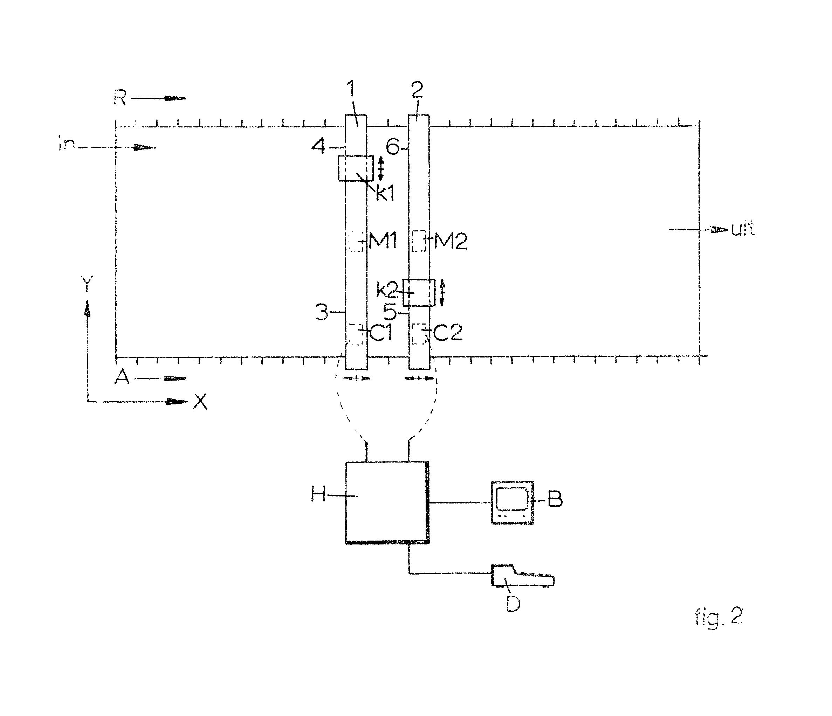

The warehouse shown schematically in plan in Fig. 2 is a hall of elongate rectangular shape. Absolute reference points A are fixed along one long side at intervals of 12 metres. Along the other long side opposite these points A, there are the same number of relative reference points R. (The maximum permissible distance between two successive reference points is dependent on the maximum permissible difference in diameter between the two driven wheels and the acceptable degree of error).

The goods enter the hall at IN and can be set down anywhere in the hall by a first crane 1.

The goods leave the hall at OUT, and a second crane 2 is used for this. The cranes are identical and it will be clear that if one of the cranes is at its extreme position the other crane can cover nearly the whole hall. Each crane has a bridge extending across the hall and supported on crane tracks by bridge wheels at each end.

Each of the cranes 1 and 2 is provided with a driving motor M1, M2 located at its centre for travelling along the hall and a trolley k1, k2 which can traverse

5.

sideways along the bridge on trolley wheels. The trolley carries the lifting hoist for the coils.

The installation on cranes 1 and 2 and the communication system between the cranes and the "fixed hall" consist of the following:

a)      a position sensing system for the X and
        Y co-ordinates (possibly for the Z-co-ordinates)

b)      an on-board or crane computer (C1,C2)

c)      a data transmission channel and

d)      a crane intercom system.

The position sensing system serves to determine the position of the trolley in both X and Y directions with a predetermined accuracy of $\pm$ 180 mm. The accuracy which can be attained at no great cost using the optical-electronic sensing system described below is good, but may be partly invalidated by the properties of the crane. This inaccuracy can be ascribed to three causes: first flange wear between carriage wheels and carriage rail or trolley wheel and trolley rail; second the dimensioning of the classification units employed and the electronics; and third the different diameters of the drive wheels of the crane on opposite sides of the hall. Making the system more accurate than $\pm$ 100 mm is of little relative value, although technically speaking it is quite possible. Thus there is a balance to be found between the additional value available from improved accuracy and the cost of providing it.

A degree of accuracy follows from the standards of selection prevalent in current practice for carriage wheels and track and trolley wheels and track respectively, and the density of reference points (A and R) is determined in this case by the pillar separation. The consequences of wheel slip are regularly corrected for, since the crane position is noted by the system every time it passes a reference point. The correction calculations for this are carried out in an on-board computer (C1,C2) on the bridge of each crane, which also manages the output to the data transmission channel.

By fitting pulse generators to the non-drive wheels - which run independently - on both sides of the crane, it is possible to obtain an improved accuracy of ± 100 mm.

The on-board computer (C1,C2) serves to manage signal traffic between the crane and the fixed computer H which is located away from the cranes. It also serves for the calculation of the exact position of bridge and trolley using the data from the sensors described below and the calculated correction factors.

The crane driver in each crane has a visual display unit connected to the on-board computer (C1,C2).

The instantaneous positions of bridge, trolley (and possibly also of the hoist) carried by the trolley are continuously displayed. In addition reports from the hall computer may be inspected on it.

The hall computer H holds in its store the addresses and other data relevant to the products stored, in this case the coils. This computer is equipped with the usual peripherals such as visual display unit B and key-board D.

For data transfer between cranes 1 and 2 and the fixed computer H in the warehouse, use is made of an inductive transmission channel, with a transfer rate of at least 1200 baud.

The number of cranes which can be equipped is a balance between message length and response time of the computers. Although only two cranes 1 and 2 are shown in the example, it is possible to connect a larger number e.g. six, cranes per hall to this transmission channel. More than one (e.g. four) transmission channels can use the same inductive loop. The control of the message traffic to the on-board computers C1 and C2 is effected by computer H which interrogates them in turn and provides them with data.

The position of each trolley (k1,k2) must be determined along the travel direction of the bridge (1 or 2) and in the traversing direction of the trolley and with an accuracy of e.g. $\pm$ 100 mm in each case. As a result of play in the crane itself - as well as wear in the wheels and track and unequal wheel diameters - there is quite a large mechanical inaccuracy. The inaccuracy of the optical and electronic system is dependent on the maximum bridge and trolley speeds respectively, the operation time of the computer and electronics and the reading accuracy of the transducer.

An indirect position determination has been chosen in this embodiment, i.e. one based on a definite number of rotations of a wheel relative to a reference point. The track location of the crane or trolley is based on a relative measurement with respect to a reference point, namely the number of wheel rotations or fractions thereof since the last reference point was passed. This is done using a pulse emitter connected to the wheel. In this case allowance has to be made for the following effects:

a)      maximum bridge and trolley speed of e.g. 3m/sec.

b)      track location of the crane relative to a reference point must not be affected by the motion of the crane due to the winding and unwinding of the drive shaft connecting the motor (M1,M2) to the driven wheels. This motion has the effect that after stopping the crane may oscillate with a damped amplitude of e.g. maximum $\pm$ 10

mm,

c)      the pulse emitters are fitted to the gear box
itself.  This gives rise to an error which has already
been included in the above-mentioned mechanical
inaccuracy.

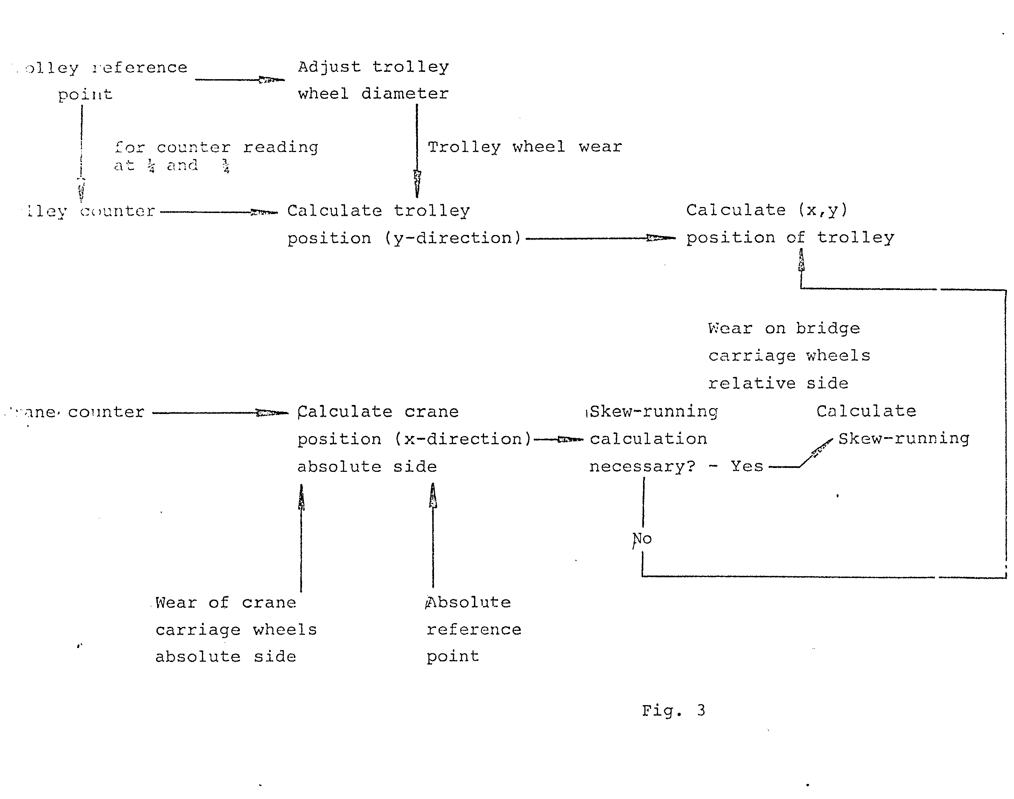

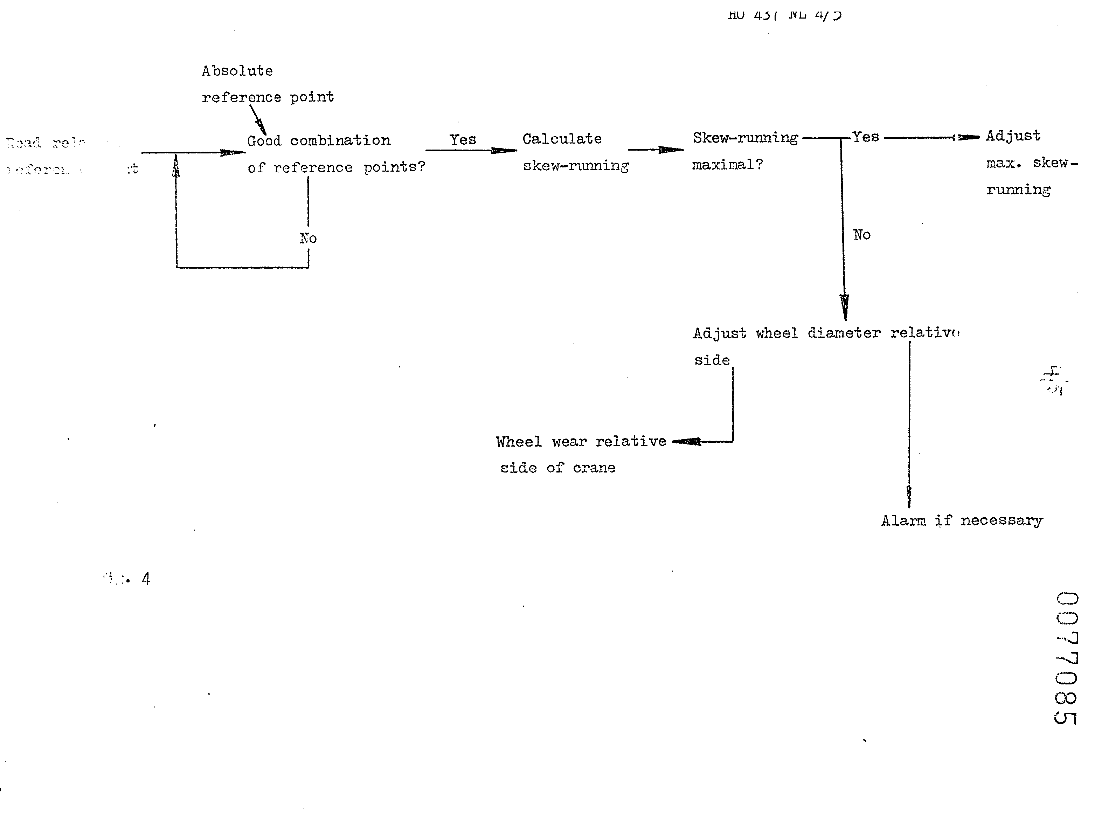

Referring to the block diagrams of Figs. 3,4 and
5, we shall give a functional specification of the
position fixing system.

An upright of e.g. 15 mm width is fixed to each
trolley k1,k2 (Fig. 2), and this is detected by two
reading units 3 and 4 or 5 and 6 respectively, located on
the trolley track and each consisting of a light source
and detector, between which the upright passes as the
trolley moves along the bridge.

It can be seen from Fig. 3 that, starting from one
of the reference points for the trolley, the number of
pulses from the trolley wheel indicates the trolley
position or Y-direction.

Then, using the data on the bridge position or X-
direction, after correction for skew-running and possible
carriage wheel wear the X,Y position of the trolley is
determined.

For the purpose of determining the crane location
in the bridge travel direction, there are for example
twelve uprights positioned along each of the long sides of the hall as reference points (A and R), and the codes on these are read by a reading unit consisting of a light source and detector using for example, a 10 mm wide beam of infra-red light pulsed in a known manner. Since contamination (dirtying) is likely, a signal must also be given when the beam is broken even if a fraction, e.g. 2% of the total light passing in a clean condition is received by the detector. The reading unit is suitable for operation in a temperature range of $- 10^{o}C$ to $+ 85^{o}C$. The shock resistance is 5 g for vibrations from 0 to 500 Hz.

As explained with reference to Fig. 2 there are an equal number of relative reference points R opposite the absolute reference points A in the hall. The relative reference points are also uprights fitted so as to allow estimation of the degree of skew-running of the bridge (1 or 2). These relative reference points R are also read optically using a light source and detector.

Between the reference points the locations of the bridge and trolley are determined using pulse emitters connected to the wheels and providing e.g. 400 pulses per revolution. It is attractive from the constructional point of view for these pulse emitters to be located directly on the motor shaft of the driving gear box of the motor unit, but this is not essential, as already mentioned above.

Fig. 4 illustrates the adjustment for the maximum skew-running at each associated set of reference points. At the same time the wheel wear on the relative reference side of the crane track is examined.

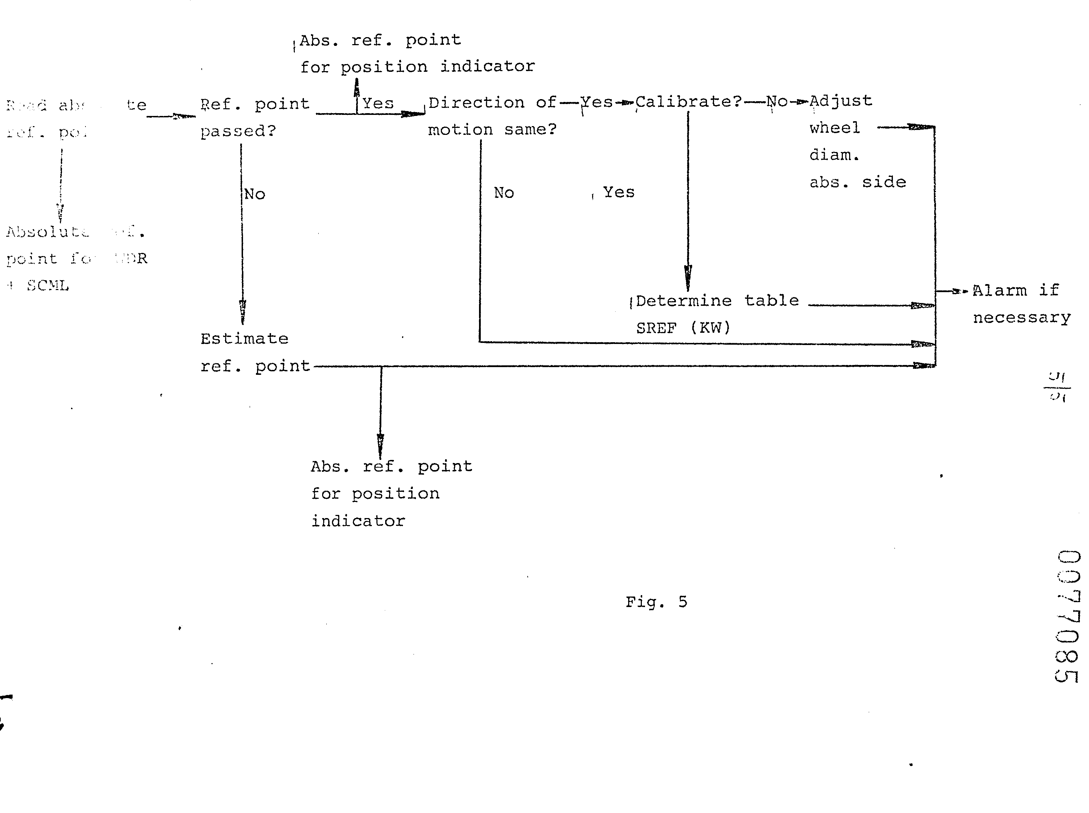

Fig. 5 shows the adjustment for wheel diameter on the absolute reference side of the crane track.

For receiving, processing and matching to the computer, and for holding signals from the transducers, an electronic interface unit is used. Here a number of signals are exhibited on LED displays with the purpose of making it simple to inspect the correct operation of the various transducers.

The interface unit has a section for selecting the reference points A and R in the bridge travel direction. At the moment that the two reading units detect the reference uprights, an eight bit code is read off and stored in an eight bit buffer. This signal serves as an interrupt signal to the on-board computer. The code for the most recently passed absolute reference point is exhibited on LED displays.

Another partof the interface unit is intended for reading the bridge travel direction pulse emitter. Using the signals from the pulse emitter it is possible to determine both the distance of travel and the direction

0077085

12.

of travel of the bridge, during which process it is necessary to make allowance for small variations around a particular counter reading. The counter reading, which can be both positive and negative, has to be stored in a buffer. The on-board computer can read the counter at any moment by latching to the buffer. This is a standard procedure to prevent loss of the counter pulses.

On passing an absolute reference point, the counter is reset to zero by a signal from the on-board computer. The direction of motion of the crane is communicated to the on-board computer. The counter reading is also exhibited on LED displays.

A third part of the interface unit produces an output signal based on the relative reference points and describing the amount of skew-running. This signal is fed to the on-board computer as an interrupt signal.

Another part is concerned with the reading by the reading units at the reference points 3 and 4, 5 and 6 respectively of the trolley (k1 or k2). The signals so produced are detected and fed to the computer as interrupt signals.

The importance in the maintenance of the cranes of latching ("buffering") and reading the signals on the interface unit is that in parallel one can view all the latest received information and can thus determine

13.

rapidly the relationship between these values.

A pulse emitter is located on the gear-box of the trolley drive for determining and measuring the trolley motion. The reading and processing of the pules is carried out in the same way as for the bridge pulse emitter.

In addition to these components of the interface unit dealing with reference points and pulse counters, corresponding circuits are available for determining the hoist height (the Z-co-ordinate).

In addition it is possible to include simulation circuits to execute the following functions: the simulation of reference points using switches; electronic simulation of the pulse emitters; and production of simulation pulses using a push button.

The data, corrected in the manner indicated at for the absolute reference points, the pulse counter for the bridge and the pulse counter for the trolley is taken to the on-board computer via a multiplexer output. The multiplexer output has here a separate test facility. All the input and output signals for the on-board computer are separate, while further measures are taken to set the signal levels for the on-board computer.

The data transfer between the on-board computers (C1 C2) of the two cranes (1,2) and the computer (H) for

14.

the hall is effected in a conventional manner using an inductive loop, so that this transfer system can be regarded as a sort of transformer with three windings. Other well-known methods of data transfer, such as capacitive coupling, optical coupling, h.f. transmission etc. are alternatively feasible.

On positioning a coil, its X and Y coordinates are placed in the memory store of computer H together with the order number and product number. When later the coil is despatched the computer H recovers these coordinates and they are communicated to the crane operator. When packages are being stacked in layers the Z-co-ordinate is also kept in the memory store. In this case of course the last-positioned coil in a vertical pile must be removed first.

15.

CLAIMS:

1.    A warehousing system for products in a warehouse, having at least one travelling crane (1,2), position sensing means for the crane and data processing means (H) for handling data relating to the locations of the products stored in the warehouse, the said travelling crane comprising a bridge (1,2) which moves longitudinally of the warehouse on bridge wheels running on two parallel spaced apart crane tracks and a trolley (k1,k2) which carries a hoist and moves transversely of the warehouse on trolley wheels running on a trolley track on said bridge, at least one said bridge wheel on each crane track being driven, characterized by:

a1)    absolute reference points (A) for the crane bridge location spaced apart along one said crane track and relative reference points·(R) for the crane bridge location spaced apart along the other said crane track,

a2)    at least two trolley reference points (3,4,5,6) for the trolley location spaced apart along said trolley track on said bridge,

a3)    first sensing means sensing the passage of the bridge past a said absolute reference point, second sensing means sensing the passage of the bridge past a said relative reference point and third sensing means

16.

sensing the passage of the trolley past a said trolley reference point,

b)      at least one first pulse emitter arranged to emit pulses in dependence on the rotation of the bridge wheels,

c)      at least one second pulse emitter arranged to emit pulses in dependence on the rotation of the trolley wheels,

d)      first data processing means (C1,C2) mounted on-board said crane (1,2) and arranged to receive the output signals of said first, second and third sensing means and said first and second pulse emitters, and from said signals to calculate and correct for

d1)     wear of the driven bridge wheels on both crane tracks,

d2)     skew-running of the crane,

d3)     wear of the trolley wheels,

d4)     slipping and skidding of both trolley wheels and bridge wheels,

e)      second data-processing means (H) mounted away from said crane and arranged to store said data relating to the locations of the stored products and

f)      a data-transfer channel for communicating data relating to the crane position and product location between said first and second data processing means which

17.

data is thus available to be used to direct the crane to a desired location.

2.     A system according to claim 1 further including an interface unit mounted between the said pulse emitters and the second data-processing means.

3.     A system according to claim 1 wherein the said absolute reference points are arranged with a spacing of 12 m along the warehouse and the position of the crane bridge when between the reference points is measured continuously by means of said first pulse emitter.

4.     A system according to claim 1 wherein the data transfer channel is of the inductive type.

5.     A system according to claim 2 further including means for sensing the height of the hoist, the output signals of which are supplied to the data-processing means.

6.     A system according to claim 1 wherein first pulse emitters are connected to at least one non-driven crane wheel running on each of said crane tracks.

1.5

fig.1

fig. 2

Trolley reference ────────► Adjust trolley
point                       wheel diameter

for counter reading         Trolley wheel wear
at ¼ and ¾

Trolley counter ──────────► Calculate trolley
                            position (y-direction) ──────────► Calculate (x,y)
                                                               position of trolley

                                                    Wear on bridge
                                                    carriage wheels
                                                    relative side

Crane counter ────────────► Calculate crane        Skew-running        Calculate
                            position (x-direction) ──► calculation                Skew-running
                            absolute side              necessary? ─ Yes ──

                                                                    No

Wear of crane               Absolute
carriage wheels             reference
absolute side               point

Fig. 3

Absolute
reference point

Read rel... ──────▶ Good combination ──── Yes ────▶ Calculate ────▶ Skew-running ──── Yes ────▶ Adjust
reference... ▲        of reference points?              skew-running        maximal?                    max. skew-
                                                                                                       running
                         │
                         No                                                          No
                         │                                                           │
                         │                                                           ▼
                                                                          Adjust wheel diameter relative
                                                                          side

                                                  Wheel wear relative ◀──┘
                                                  side of crane

                                                                                     │
                                                                                     ▼
                                                                          Alarm if necessary

Fig. 4

Abs. ref. point
for position indicator

Read abs~~olu~~te → Ref. point ──── Yes → Direction of ──Yes→ Calibrate? ──No→ Adjust
ref. po~~int~~      passed?              motion same?                            wheel
                                                                                 diam.
                                                                                 abs. side

              No                        No        Yes

Absolut~~e ref.~~
point fo~~r~~ ~~D~~DR
+ SCML

                                                              Determine table ──── → Alarm if
                                                              SREF (KW)                necessary

              Estimate
              ref. point

Abs. ref. point
for position
indicator

Fig. 5

0077085